# EUROPÄISCHE PATENTANMELDUNG

(11) **EP 2 690 127 A1**
(43) Veröffentlichungstag der Anmeldung: **29.01.2014**
(21) Anmeldenummer: 12178309.6
(22) Anmeldetag: 27.07.2012
(51) Int. Cl.: C08J 3/07, C08J 7/04, B32B 27/06, B32B 27/34, C08L 23/08, C09D 177/00

(54) **Verfahren zur Herstellung einer Polymer-Dispersion und deren Verwendung**

(71) Anmelder: nolax AG, 6203 Sempach Station (CH)
(72) Erfinder: Hosotte, Claude, 68220 Michelbach le Haut (FR); Herzog, Erwin, 6215 Beromünster (CH)
(74) Vertreter: Hepp Wenger Ryffel AG

(57) **Zusammenfassung**

Verfahren zur Herstellung einer Dispersion, beinhaltend als disperse Phase mindestens eine Polymerkomponente, umfassend die Schritte:
a. Lösen mindestens einer Polymerkomponente in einem organischem, mit Wasser mischbaren Lösungsmittel,
b. Zugabe einer ausreichenden Menge einer Base zur Sicherstellung eines pH-Wertes nach Schritt c, welcher grösser 7 ist,
c. Zuführen einer wässrigen Emulsion mindestens eines Ionomers zu der in Schritt b) erhaltenen Polymerlösung, insbesondere durch Einrühren in die Polymerlösung.

## Beschreibung

Die Erfindung betrifft ein Verfahren zur Herstellung einer Dispersion beinhaltend als disperse Phase mindestens eine Polymerkomponente. Ferner betrifft sie ein Verfahren zur Herstellung von Folien welche mit der erfindungsgemässen Dispersion beschichtet sind, sowie der Herstellung von Laminaten welche die erfindungsgemässen Folien beinhaltet.

Bislang wurden zur Herstellung von Polymer-Dispersionen diverse Additive eingesetzt. So wurden insbesondere Netzmittel und Emulgatoren verwendet, um eine Dispersion zu erhalten. Diese Zusätze sind für die Endanwendung unnötig. Oftmals sind solche Zusätze sogar unerwünscht, da sie migrieren oder ausgewaschen werden können. Tendenziell verschlechtern die Zusätze zudem die Beständigkeit der damit hergestellten Laminate, insbesondere gegenüber wässrigen Lösungen. Die bekannten Herstellungsmethoden erforderten ausserdem oft die Verwendung von speziellem Equipment und speziellen Bedingungen.

Die US 6,077,900 beschreibt eine wässrige Polyamid-Dispersion und deren Herstellung. Ein Polyamidharz wird in einem organischen Lösungsmittel gelöst. Dabei wird eine Menge Lösungsmittel benutzt, welche gerade ausreicht um das Polyamidharz zu lösen. Zusätzlich wird ein Netzmittel für die Herstellung der Dispersion benutzt. Das Netzmittel wird normalerweise in die Lösung aus organischem Lösungsmittel und Polyamid zugegeben. Typischerweise ist das Netzmittel ein nichtionisches Netzmittel; anionische Netzmittel zusammen mit nichtionischen Netzmitteln stellen eine Alternative dar. Die Lösung aus Polyamid und organischem Lösungsmittel beinhaltet zudem anorganisches, alkalisches Material in einer ausreichenden Menge, um die Lösung in eine Öl in Wasser Dispersion zu bringen. Danach wird Säure beinhaltendes Wasser unter Rühren der Mixtur beigefügt. Dabei wird die Mixtur typischerweise erhitzt. Nicht-Polyamid Polymere werden der Polyamid-Lösung vor oder nach der Wasserzugabe beigemischt. Abschliessend wird das organische Lösungsmittel vorzugsweise komplett aus der Öl-Wasser Dispersion entfernt. Durch den Zusatz von Netzmitteln sind Netzmittelrückstände in der Dispersion enthalten. Diese Rückstände können sich negativ auf die Beständigkeit der aus der Dispersion hergestellten Endprodukte auswirken.

Die US 2007/0292705 beschreibt eine wässrige Dispersion, sowie deren Herstellung und Verwendung. Mindestens ein thermoplastisches Harz wird mit mindestens einem Dispergiermittel und Wasser gemischt. Als Dispergiermittel beschrieben sind Stoffe, welche mindestens eine Carbonsäure, ein Salz einer Carbonsäure, ein Carbonsäureester oder das Salz eines Carbonsäureesters enthalten. Die Herstellung der Dispersion beinhaltet das Schmelzkneten von mindestens einem thermoplastischen Harz mit dem Dispergiermittel. Das Produkt wird verdünnt und nochmals schmelzgeknetet, um die Dispersion zu erhalten. Der Vorgang des Schmelzknetens benötigt spezielles Equipment wie beispielsweise einen BANBURY-Mixer, ein Einschnecken- oder ein Mehrschneckenextruder. Dieses Equipment ist kosten- und platzintensiv.

Es ist somit die Aufgabe der Erfindung, die Nachteile des Bekannten zu überwinden, insbesondere die Herstellung von Polyamid-Dispersionen zu vereinfachen, so dass die Herstellung ohne Additive und ohne spezielles Equipment erfolgen kann. Zudem soll eine Folie bereitgestellt werden, welche mit der Dispersion beschichtet ist. Mit der Folie hergestellt Laminate sollen zudem eine gute Beständigkeit gegenüber Lösungsmitteln aufweisen.

Diese Aufgabe wird durch die Gegenstände der unabhängigen Ansprüche gelöst.

Die erfindungsgemässen Verfahren eignen sich dazu, Polyamid-Dispersionen bereitzustellen, ohne dass es dabei zu den genannten Nachteilen des Standes der Technik kommt.

Ein erster Aspekt der Erfindung betrifft somit ein Verfahren zur Herstellung einer Dispersion, beinhaltend als disperse Phase mindestens eine Polymerkomponente, umfassend die Schritte:
a. Lösen mindestens einer Polymerkomponente in einem organischem, mit Wasser mischbaren Lösungsmittel,
b. Zugabe einer ausreichenden Menge einer Base zur Sicherstellung eines pH-Wertes nach Schritt c, welcher grösser 7 ist.,
c. Zuführen einer wässrigen Emulsion mindestens eines Ionomers zu der in Schritt b) erhaltenen Polymerlösung, insbesondere durch Einrühren in die Polymerlösung.

Es ist möglich die Schritte a. und b. sowohl nacheinander wie auch gleichzeitig durchzuführen.

Ionomere sind thermoplastische Kunststoffe, welche durch eine Copolymerisation eines unpolaren mit einem ionogenen Monomer gewonnen werden. Im Gegensatz zu herkömmlichen Thermoplasten sind in Ionomeren sowohl Nebenvalenzkräfte wie auch Ionenbindungen wirksam.

Bei diesem Verfahren wird zuerst mindestens ein Polymer in einem organischen, wasserlöslichen Lösungsmittel gelöst. Danach wird die Lösung durch Zugabe einer Base alkalisch eingestellt. Dieser Polymer-Lösung wird dann langsam eine wässrige Emulsion mindestens eines Ionomers zugerührt. Es ist insbesondere darauf zu achten, dass die Ionomeremulsion der Polymer-Lösung zugeführt wird und nicht die Polymer-Lösung der Ionomeremulsion. Es wurde überraschenderweise gefunden, dass eine Zugabe der Ionomerlösung zu der Polymerlösung zielführend ist, d.h. dass eine saubere Dispersion entsteht und es nicht zur Koalugation kommt. Es hat sich zudem gezeigt, dass hochwertige Dispersionen bereitgestellt werden können, wenn die Ionomeremulsion langsam und unter Rühren der Polymerlösung beigefügt wird. Vorzugsweise wird die Ionomeremulsion in die Polymerlösung unter Rühren getropft. Die so gewonnene Dispersion kann abfiltriert und abgefüllt werden, bevor sie weiterverwendet wird.

Die wässrige Polymerlösung kann ohne Verwendung von Emulgatoren und/oder Netzmitteln mit Standard-Mischwerkzeugen hergestellt werden. Es wird derzeit vermutet, dass das Ionomer selbst gewissermasssen als Emulgator/Schutzkolloid wirkt. Dadurch wird ein kostengünstiges Verfahren bereitgestellt. Zudem müssen keine grossen, kostenintensiven Maschinen für das Verfahren bereitgestellt werden, wodurch sich das Verfahren platz- und kostensparend durchführen lässt.

In der erfindungsgemäss hergestellten Dispersion liegt das Polymer bevorzugt in Form von Mikropartikeln (1 bis 20 µm (Mikrometer) Durchmesser) vor. Die Mikropartikel setzen sich im Verlauf der Zeit nicht ab, wodurch eine Dispersion bereitgestellt werden kann, welche über die Zeit gleichmässig stabil bleibt. Es ist zudem möglich, die Dispersion nachträglich mit Wasser zu verdünnen. Durch das Verdünnen kann die Viskosität für unterschiedliche Beschichtungsmethoden angepasst werden.

Besonders bevorzugt ist ein Verfahren, bei welchem die disperse Phase neben der mindestens einen Polymerkomponente mindestens eine Ionomerkomponente enthält.

In der nach dem erfindungsgemässen Verfahren hergestellten dispersen Phase befinden sich Polymerpartikel, welche von Ionomeren umgeben sind. Dadurch wird eine gleichmässige Verteilung des in Mikropartikeln vorliegenden Polymers sichergestellt, wodurch eine qualitativ hochwertige Dispersion bereitgestellt wird. Da die Ionomere direkt als Emulgatoren wirken, welche die Polymerpartikel gewissermassen als Schutzkolloid umgeben, sind keine weiteren Additive nötig.

Bevorzugte Polymerkomponenten zeichnen sich dadurch aus, dass sie in mit Wasser mischbaren Lösungsmitteln gelöst werden können.

In einer besonders bevorzugten Ausführungsform ist die mindestens eine Polymerkomponente ein Polyamid.

Besonders Bevorzugt ist die Polyamidkomponente ein nicht-wasserlösliches, insbesondere thermoplastisches Polyamid.

In einer weiteren bevorzugten Ausführungsform ist die mindestens eine Polymerkomponente ein Polyvinylbutyral. Polyvinylbutyral (PVB) ist als Schmelzklebstoff in Form von Zwischenfolien für Verbund-Sicherheitsglas bekannt. PVB-Harze werden zudem als Bindemittel eingesetzt. Eine Dispersion mit PVB erlaubt daher eine vielfältige Anwendung im Bereich der Laminatproduktion.

In einem bevorzugten Verfahren wird die Polymerlösung mit Ammoniak alkalisch eingestellt. Alternativ können andere organische Basen verwendet werden, welche bei einem allfälligen Trocknen des Klebstofffilmes ebenfalls verdampfen. Beispiele dafür sind Alkylamine, insbesondere Methylamin.

Ein weiterer Aspekt der Erfindung, betrifft ein Verfahren zur Herstellung einer Folie, bei welchem eine Folie mit einer erfindungsgemäss hergestellten Dispersion beschichtet wird. Die Dispersion wird dabei besonders bevorzugt in einem Tiefdruckverfahren aufgedruckt. Alternativ wird die Dispersion durch Aufstreichen oder Aufsprühen auf die Folie gebracht.

Es ist denkbar, die Dispersion anderweitig aufzubringen. Die Dispersion sollte dabei möglichst gleichmässig auf einer Oberfläche der Folie aufgebracht werden. Dadurch befinden sich Polyamidpartikel mit einer geschätzten Korngrösse von ca. 10 µm (Mikrometer) gleichmässig verteilt auf der Folienoberfläche. Die Polyamidpartikel können auf der beschichteten Folie als Abstandhalter wirken, wenn die Folie beispielsweise auf einen Kern gewickelt wird. Dadurch kann eine ausgezeichnete Antiblockwirkung wie auch Abrollbarkeit der Folie gewährleistet werden. Es kann dadurch auf eine Beschichtung der Rollenware mit Antiblockmittel und/oder Distanzhalter, beziehungsweise auf eine Modifizierung der Klebstoffmasse mit geeigneten Antiblockmitteln verzichtet werden, wodurch gegenüber bekannten Verfahren ein Arbeitsschritt gespart wird. Dies wiederum führt zu geringeren Material- und Arbeitskosten.

Die Erfindung betrifft des Weiteren ein Verfahren zur Herstellung eines Laminats, bei welchem eine nach dem erfindungsgemässen Verfahren hergestellte Folie unter Wärmeeinwirkung auf ein Substrat laminiert wird.

Es hat sich gezeigt, dass ein nach obigem Verfahren hergestellten Laminatverbund nach entfernen der Trägerfolie gegen organische Lösungsmittel und wässrige Lösungen äusserst beständig ist. Der erfindungsgemäss hergestellte Laminatverbund ist selbst im Lösungsmittel beständig, in welchem das Polymer ursprünglich gelöst war.

Ein weiterer Aspekt der Erfindung, betrifft die Verwendung einer Dispersion, insbesondere eine nach dem erfindungsgemässen Verfahren bereitgestellte Dispersion, beinhaltend als disperse Phase mindestens eine Polymerkomponente und mindestens eine Ionomerkomponente, zur Beschichtung einer Folie.

Dabei wird die Dispersion möglichst gleichmässig auf die Folie aufgetragen. Die flüssige Phase kann anschliessend abdampfen, so dass die ehemals disperse Phase auf der Folie zurückbleibt. Dadurch kann eine Folie bereitgestellt werden, welche auf ihrer Oberfläche gleichmässig verteilte Polymerpartikel aufweist, welche als Abstandhalter wirken können. Es hat sich gezeigt, dass die nach obigem Verfahren hergestellte, trockene Beschichtung gegen organische Lösungsmittel und wässrige Lösungen äusserst beständig ist. Die erfindungsgemäss hergestellte Beschichtung ist selbst im Lösungsmittel beständig, in welchem das Polymer ursprünglich gelöst war.

Eine nach dem erfindungsgemässen Verfahren bereitgestellte Dispersion eignet sich dabei besonders gut, da sie ohne Fremdstoffrückstände, wie zum Beispiel Netzmittelrückstände bereitgestellt werden kann.

Ausserdem betrifft die Erfindung eine Folie mit auf mindestens einer Seite angeordneten, insbesondere im Wesentlichen diskret verteilten Polymerpartikel, erhältlich durch ein erfindungsgemässes Verfahren.

Die erfindungsgemässe Folie kann ohne den Zusatz von Antiblockiermittel und/oder Distanzhalter aufgerollt werden ohne zu verkleben. Die einheitlich verteilten Polymermikropartikel wirken dabei als Abstandhalter. Dadurch können die Folien schneller und kostengünstiger hergestellt werden als mit den bekannten Verfahren.

Die Erfindung betrifft auch die Verwendung von mindestens einem in einer wässrigen Emulsion vorliegenden Ionomer zur Stabilisierung einer Polymerdispersion.

Das mindestens eine Ionomer wirkt dabei gewissermassen als Emulgator welches ein Schutzkolloid um die Polymerpartikel bildet. Dadurch erübrigt eine weitere Stabilisierung der Polymerpartikel innerhalb der Dispersion.

### Beispiel:

Es wurde eine 50%-Lösung eines alkohollöslichen Polyamidharzes (z.B. Uni-Rez 138, Eurelon 962, Flex-Rez 1155 AS C Versamid 750, etc.) in Ethanol (95 Vol. %) hergestellt und mit Ammoniak alkalisch eingestellt. Unter Rühren wurde langsam eine handelsübliche Ionomeremulsion (z.B. nolax C35.3030, 37.7 % FK) zugegeben. Die Zugabe konnte bei Raumtmpereatur erfolgen oder bei Temperaturen bis zum Siedepunkt des Wasser-/Lösemittelgemischs. Die Viskosität der Mischung stieg dabei stark an, bis sie ein Maximum erreichte bei einem Mischungsverhältnis von ca. 1:1 (Ethanollösung zu Emulsion). Nun sank die Viskosität bei weiterer E-mulsions-Zugabe kontinuierlich. Die Zugabe von Emulsion wurde fortgesetzt, bis ein Mischungsverhältnis von 1:4 (Ethanollösung zu Emulsion) erreicht wurde; beliebige andere (grössere oder kleinere) Mischungsverhältnisse sind herstellbar. Die so hergestellte Dispersion hatte einen Festkörper-Gehalt von 40 %, was 10 % Polyamid und 30 % Ionomer entsprach. Der Lösemittelanteil betrug 60 %, was 10 % Ethanol und 50 % Wasser entsprach. Der Ethanolgehalt der Dispersion kann bei Bedarf durch Destillation oder Verdünnen verringert werden.

Die so hergestellte Dispersion wurde auf eine partiell metallisierte Heissprägefolie beschichtet in einer Schichtstärke von 20 g/m² (nass) und getrocknet. Die so hergestellte Beschichtung fühlte sich auf Grund der Polyamid-Partikel leicht rau an. Ebenso war die Beschichtung auf Grund der Partikelgrösse transluszent. Die beschichtete Folie zeigte bei 40°C keine Verblockung.

Nach der Verklebung der Heissprägefolie mittels Laminator bei 115°C auf ein bedrucktes Papier und Entfernen der Trägerfolie, war die Klebstoffschicht transparent. Der so hergestellte Verbund wurde während 30 min in verschiedene Lösemittel und wässrige Lösungen eingelegt. Der Verbund war beständig gegen alle getesteten organischen Lösungsmittel, inklusive Ethanol, sowie gegen alle wässrigen Lösungen.

Weitere Einzelheiten der Erfindung sind den Figuren zu entnehmen. Es zeigen schematisch:
- Figur 1: Beschichtete Folie
- Figur 2: Abschnitt einer aufgerollten, beschichteten Folie
- Figur 3: Laminat

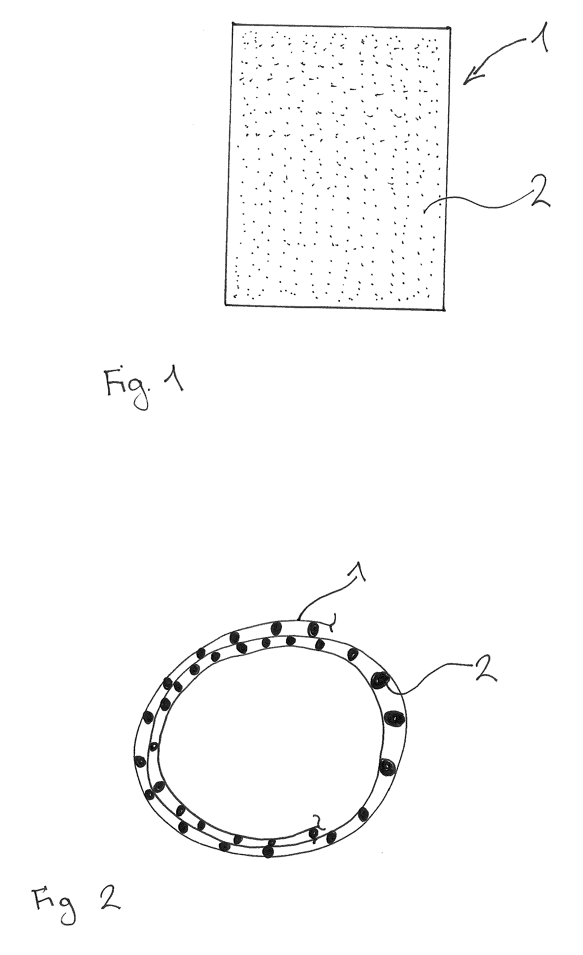

Figur 1 zeigt eine beschichtete Folie 1, welche mit Polyamidpartikeln 2 beschichtet ist. Als Folie dient eine partiell metallisierte Heissprägefolie. Zur Herstellung der Beschichtung, wird eine Dispersion auf die Folie 1 aufgedruckt. Durch das Aufdrucken wird die Dispersion in gleichmässiger Dicke mit eine Schichtstärke von 20 g/m² auf die Folie 1 aufgebracht. Danach erfolgt eine Trocknung der beschichteten Folie 1. Die so erzeugte Folie weist gleichmässig verteilte Polyamidpartikel 2, mit einer geschätzten Korngrösse von ungefähr 10 µm, auf einer Seite der Folie 1 auf. Die Beschichtung der Folie 1 lässt sich zum einen dadurch erkennen, dass sich die Folie 1 durch die Partikelbeschichtung rau anfühlt und zum anderen dadurch, dass die Folie 1 durch die Partikelbeschichtung transluszent ist.

Figur 2 zeigt einen Ausschnitt der Folie 1 aus Figur 1. Anders als in Figur 1 ist die Folie 1 in Figur 2 aufgerollt. Die Partikel 2 wirken als Abstandshalter und sorgen dafür, dass die Folie 1 nicht verklebt. Es ist durch die Partikel 2 auch eine gute Abrollbarkeit der Folie 1 gewährleistet. Durch den Verzicht auf anderweitige Antiblockiermittel und/oder Distanzhalter kann die Folie 1 schnell und kostengünstig hergestellt und aufgerollt werden.

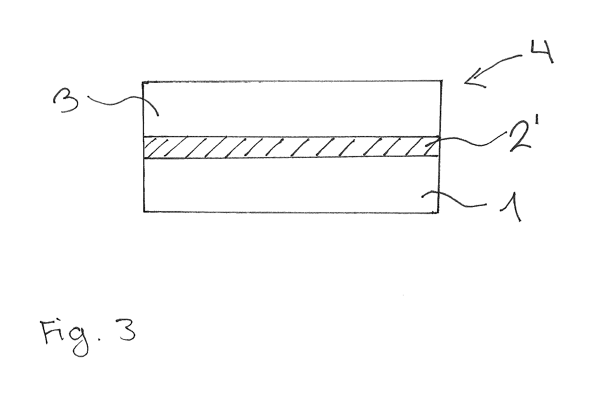

Figur 3 zeigt ein Laminat 4, welches aus der beschichteten Folie 1 der Figuren 1 und 2 und einem bedruckten Papier 3 besteht. Zur Herstellung des Laminats 4, wird die Folie 1 mit Hilfe eines Laminators beispielsweise bei 115 °C auf das bedruckte Papier 3 verklebt. Durch die Hitze schmelzen die Partikel 2 zu einer Klebstoffschicht 2'. Die Klebstoffschicht 2' ist im Gegensatz zu der Partikelschicht transparent. Nach entfernen der Folie 1 ist der Laminatverbund 3; 2' während mindestens 30 Minuten gegen organische Lösungsmittel, inklusive Ethanol beständig.

## Patentansprüche

1. Verfahren zur Herstellung einer Dispersion, beinhaltend als disperse Phase mindestens eine Polymerkomponente, umfassend die Schritte:
a. Lösen mindestens einer Polymerkomponente in einem organischem, mit Wasser mischbaren Lösungsmittel,
b. Zugabe einer ausreichenden Menge einer Base zur Sicherstellung eines pH-Wertes nach Schritt c, welcher grösser 7 ist,
c. Zuführen einer wässrigen Emulsion mindestens eines Ionomers zu der in Schritt b) erhaltenen Polymerlösung, insbesondere durch Einrühren in die Polymerlösung;

2. Verfahren nach Anspruch 1, bei dem die Schritte a. und b. gleichzeitig durchgeführt werden.

3. Verfahren gemäss einem der Ansprüche 1 oder 2, bei dem die wässrige Emulsion in Schritt c) langsam (z.B.durch Tropfen) der Polymerlösung zugeführt wird.

4. Verfahren gemäss einem der Ansprüche 1-3, bei welchem die disperse Phase, neben der mindestens einen Polymerkomponente, mindestens eine Ionomerkomponente enthält.

5. Verfahren gemäss einem der Ansprüche 1-4, **dadurch gekennzeichnet, dass** die Polymerkomponente in mit Wasser mischbaren Lösungsmitteln gelöst werden kann.

6. Verfahren gemäss einem der Ansprüche 1-5, bei welchem die mindestens eine Polymerkomponente ein Polyamid ist.

7. Verfahren gemäss Anspruch 6, bei welchem die mindestens eine Polyamidkomponente ein nicht-wasserlösliches, insbesondere thermoplastisches Polyamid ist.

8. Verfahren gemäss einem der Ansprüche 1-5, bei welchem die mindestens eine Polymerkomponente ein Polyvinylbutyral ist.

9. Verfahren gemäss einem der Ansprüche 1-8, bei welchem die Polymerlösung in Schritt b) mit einer flüchtigen Base alkalisch eingestellt wird.

10. Verfahren nach einem der Ansprüche 1-9, bei welchem die Polymerlösung in Schritt b) mit Ammoniak alkalisch eingestellt wird

11. Verfahren zur Herstellung einer beschichteten Folie, bei welchem eine Folie mit einer nach dem Verfahren gemäss einem der Ansprüche 1-10 hergestellten Dispersion beschichtet wird, insbesondere durch Aufdrucken in einem Tiefdruckverfahren.

12. Verfahren zur Herstellung eines Laminats, bei welchem eine nach dem Verfahren gemäss Anspruch 11 hergestellte Folie unter Wärmeeinwirkung auf ein Substrat laminiert wird.

13. Verwendung einer Dispersion, insbesondere einer nach dem Verfahren gemäss einem der Ansprüche 1-10 hergestellten Dispersion, beinhaltend als disperse Phase mindestens eine Polymerkomponente und mindestens eine Ionomerkomponente, zur Beschichtung einer Folie.

14. Folie mit auf mindestens einer Seite angeordneten, insbesondere im Wesentlichen diskret verteilten Polymerpartikel, erhältlich durch ein Verfahren gemäss Anspruch 10 oder 11.

15. Verwendung mindestens eines in einer wässrigen Emulsion vorliegenden Ionomers zur Stabilisierung einer Polymerdispersion.
